# EUROPEAN PATENT APPLICATION

(11) **EP 2 698 502 A1**
(43) Date of publication of application: **19.02.2014**
(21) Application number: 12180214.4
(22) Date of filing: 13.08.2012
(51) Int. Cl.: F01D 11/08, F01D 21/00

(54) **Method for measuring the cold build blade tip clearance of a turbomachine and tip clearance measuring arrangment for conducting said method**

(71) Applicant: Alstom Technology Ltd, 5400 Baden (CH)
(72) Inventor: Rauch, Marc, 8105 Regensdorf (CH); Seng, Daniel, 5430 Wettingen (CH); Corradi, Mauro, 5430 Wettingen (CH)

(57) **Abstract**

A method for measuring the cold build blade tip clearance (c) between the tip (19) of a blade (18) and the inner wall (13) of a stationary housing (12) of a turbomachine, comprises the steps of
a) providing a radial bore (27), which extends through said housing (12) to give access from outside said housing (12) to the interior of said housing (12), at a location, where said blade (18) passes with its tip (19), when said rotor (14) rotates around said machine axis (11);
b) providing a mechanical stop (26) for precisely limiting a radial movement through said bore (27) towards the interior of said housing (12);
c) inserting a measurement tool (28) into said bore (27) until it abuts against said mechanical stop (26);
d) moving said blade (18) with its tip (19) along said bore (27); and
e) measuring by means of said measuring tool (28) the distance between the passing tip (19) and the mechanical stop (26).

## Description

### BACKGROUND OF THE INVENTION

The present invention relates to the technology of axial turbomachines, such as compressors and turbines, especially in the gas turbine field. It refers to a method for measuring the cold build blade tip clearance of a turbomachine according to the preamble of claim 1. It further refers to a tip clearance measuring arrangement for conducting said method.

### PRIOR ART

The efficiency of a turbomachine like a compressor depends on the clearance between the tips of the rotating blades and the inner wall of the surrounding housing.

Due to the different thermal expansion of various parts and sections during operation of the machine the clearance may change with changing operating conditions. A basic clearance parameter is the cold build blade tip clearance, which measures the clearance in the cold machine resulting from the manufacturing process.

Usually the cold build tip clearance measurement is done with upper half housings of the machine removed. The measurement is than performed by using a feeler gauge, which results in measurement deviations with regard to the real tip clearance in closed engine condition. Thus, with this measurement method the deformation of modules (considering the difference of the inner housing diameter and circumferential shape between closed and open engine condition) need to be considered. Today the tip clearance measurement with closed engine is only possible, where man has access to the machine to measure the tip clearance with the feeler gauge.

Document US 2012032689 A1 discloses an electromagnetic field sensor assembly for blade tip clearance measurement and control during operation in a gas turbine engine that includes a ceramic sensor body, a multi-layered wire coil wound about a distal end portion of the sensor body for producing an electromagnetic field, a ceramic well enclosing the sensor body and the coil, and a metallic housing surrounding the well and having an open distal end.

Document US 2011243708 A1 teaches a method of calculating the tip clearance during operation of a combustion turbine engine that includes the steps of: measuring a cold tip clearance and a cold shell-to-shell distance; while the combustion turbine engine is operating, measuring an operating parameter and measuring a shell-to-shell distance with a proximity sensor; calculating the tip clearance based on the cold tip clearance measurement and the operating parameter measurement; calculating the shell-to-shell distance based on the cold shell-to-shell distance measurement and the operating parameter measurement; comparing the shell-to-shell distance measurement of the proximity sensor with the shell-to-shell distance calculation; and calibrating the calculated tip clearance calculation based on the comparison.

Document US 2011188994 A1 discloses a system for sensing at least one physical characteristic associated with an engine including a turbine having a plurality of blades turning inside a casing, the system including: a pressure sensor coupled substantially adjacent to the casing and including at least one output; a port in the turbine casing for communicating a pressure indicative of a clearance between the blades and casing to the pressure sensor; a cooling cavity substantially surrounding the pressure sensor; and, an inlet for receiving fluid from the engine and feeding the fluid to the cooling cavity to cool the pressure sensor; wherein, the pressure sensor output is indicative of the clearance between the blades and casing.

Document US 7,207,769 B2 provides a gas turbine with a control technology which detects clearance between the tip of rotating blade and the inner circumference surface of ring segment surrounding them and adjusts the temperature, the pressure and the flow volume of the cooling fluid for blade rings/ring segments and the cooling fluid for rotors based on the output. A sensor is provided to detect the clearance between the tip of the rotating blade and the inner circumference surface of the ring segment. A sensor is integrated together with a first guide pipe by having a posterior portion thereof screwed together to a secondary pipe being installed to an edge of the first guide pipe inside of which a cooling fluid is introduced into. The first guide pipe is pressed to the blade ring from the outside of the casing so as to retain. The sensor and the first guide pipe being integrated together by being screwed together will not be separated although they are subject to vibrations during operation of a gas turbine and can be pulled out and inserted from the outside of the casing in replacement.

Document WO 2005073667 A1 discloses an apparatus and a method for measuring the clearance between the blade tips of the compressor blades of a rotatable compressor assembly and the housing in which the compressor assembly is mounted in a gas turbine engine. The apparatus includes an inductive proximity sensor disposed in the housing and positioned in close proximity to but not touching the blade tips of the compressor blades of the compressor assembly. The inductive proximity sensor is adapted to generate a magnetic field and to sense changes in the magnetic field as the assembly is rotated and the blade tips are sequentially brought into close proximity to the inductive proximity sensor. The inductive proximity sensor is mounted in one or more alignment ports defined in the housing of the gas turbine engine. A device displays the clearance between the inductive proximity sensor and the blade tips of the compressor blades of the rotatable compressor assembly.

Document US 2009165540 A1 teaches a method for measuring blade tip clearance for a gas turbine engine having a fan case assembly and a rotor having a plurality of blades, said method including the steps of removably attaching a measurement tool to the fan case assembly, the measurement tool having a sensor, rotating the rotor, and measuring blade tip clearance for the plurality of blades during the rotation of the rotor.

Correspondingly, document US 2010043576 A1 discloses an apparatus for measuring a blade tip clearance for a gas turbine engine having a fan case assembly, a rotor and a plurality of blades associated with said rotor, said fan case assembly having an inner surface, said blades having a tip, comprising: a frame having an attachment system for attaching said frame to said fan case assembly; an arm associated with said frame; a non-contact measurement sensor associated with said arm; and a gap disposed between said tip and said inner surface; wherein said sensor is adapted to measure said gap.

### SUMMARY OF THE INVENTION

It is an object of the present invention to provide a reliable, more accurate measurement concept by minimizing the effort to perform the cold build tip clearance measurement.

This and other objects are obtained by a method according to claim 1 and a measuring arrangement according to claim 6.

The inventive method for measuring the cold build blade tip clearance between the tip of a blade, which is mounted on a rotor of an axial turbomachine, whereby said rotor rotates about a machine axis, and the inner wall of a stationary housing, which coaxially surrounds said rotor and its blading, comprises the steps of:
a) providing a radial bore, which extends through said housing to give access from outside said housing to the interior of said housing, at a location, where said blade passes with its tip, when said rotor rotates around said machine axis;
b) providing a mechanical stop for precisely limiting a radial movement through said bore towards the interior of said housing;
c) inserting a measurement tool into said bore until it abuts against said mechanical stop;
d) moving said blade with its tip along said bore; and
e) measuring by means of said measuring tool the distance between the passing tip and the inner wall.

According to an embodiment of the invention said measuring tool comprises a measuring head, which is moveable in radial direction, projects from said bore into the interior of said housing and can be pushed back into said bore against the action of a spring, and that the tip of said passing blade is gauged by said measuring head.

Specifically, said measuring head can be pushed back into said bore in an end position, where the measuring head is in coincidence with the contour of the inner wall, and the distance between said end position and an actual position of the measuring head is measured and visualized by means of a dial gauge.

As an alternative, said measuring head can be pushed back into said bore in an end position, where the measuring head is in coincidence with the contour of the inner wall, and that the distance between said end position and an actual position of the measuring head is measured and transmitted to a computer equipment.

According to another embodiment of the invention the measurement tool in step c) of the claimed method is screwed into said bore.

The tip clearance measuring arrangement according to the invention for conducting the method according to the invention comprises: a rotor with at least one blade, which rotor rotates around a machine axis; a stationary housing, which coaxially surrounds said rotor and its blading; a radial bore, which extends through said housing to give access from outside said housing to the interior of said housing, at a location, where said blade passes with its tip, when said rotor rotates around said machine axis; a mechanical stop for precisely limiting a radial movement through said bore towards the interior of said housing; and a measurement tool being removably inserted into said bore to abut against said mechanical stop.

According to an embodiment of the invention said measurement tool is screwed into said bore.

According to another embodiment of the invention said measuring tool comprises a measuring head, which is moveable in radial direction, projects from said bore into the interior of said housing and can be pushed back into said bore against the action of a spring.

Specifically, said measuring head is moveable between an end position, where the measuring head is in coincidence with the contour of the inner wall, and a measuring position, where it projects from said bore into the interior of said housing, and that means are provided for measuring the distance between said end position and a measuring position.

More specifically, said measuring means comprises a dial gauge.

As an alternative, said measuring means comprises a transmitter being in wireless connection with a computer equipment.

### BRIEF DESCRIPTION OF THE DRAWINGS

The present invention is now to be explained more closely by means of different embodiments and with reference to the attached drawings.
- Fig. 1: shows a longitudinal cross section of a typical compressor as used in a gas turbine and
- Fig. 2: shows an embodiment of the tip clearance measuring arrangement according to the invention.

### DETAILED DESCRIPTION OF DIFFERENT EMBODIMENTS OF THE INVENTION

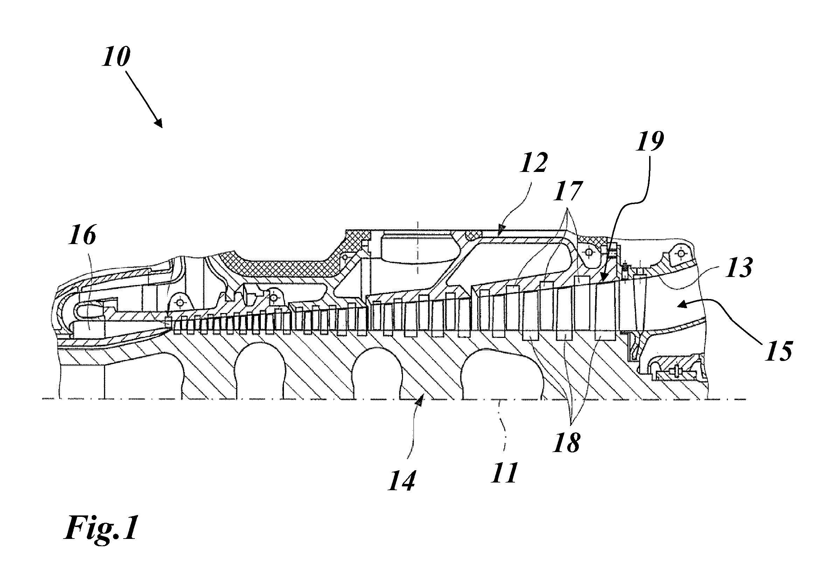

Fig. 1 shows a longitudinal cross section of a typical compressor as used in a gas turbine (see document CH 704 212 A1). The compressor 10 of Fig. 1 comprises a rotor 14, which rotates about a machine axis 11 and is surrounded by a coaxial housing 12. The annular space or channel between the rotor body and the inner wall 13 of the housing 12 guides the air (or gas) to be compressed from an inlet 15 to an outlet 16. Within said annular space or channel a plurality of (running) blades 18 and (guiding) vanes 17 are arranged in alternating fashion. The blades 18 are mounted on the rotor 14, and end with their blade tips 19 in direct vicinity of the inner wall 13, each having a cold build blade tip clearance. The vanes 17 are mounted on the inner wall 13 of the housing 12.

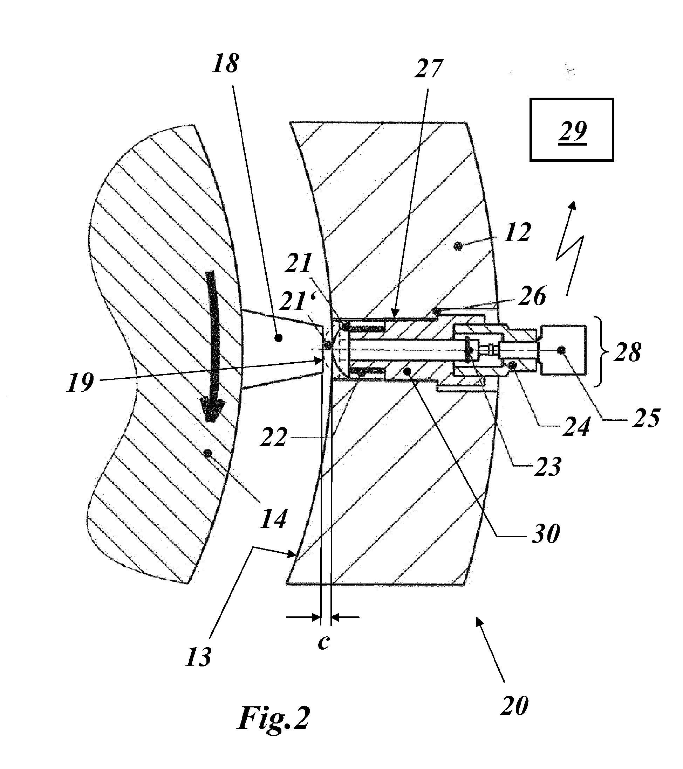

Fig 2 shows in a magnified cross section the situation regarding the cold build blade tip clearance c between the tip of a single blade 18 on rotor 14 and the inner wall 13 of the housing 12, and an embodiment of the tip clearance measuring arrangement according to the invention.

With the method and arrangement according to the invention the measurement of the tip clearance c can be performed without opening the engine and considering the deformation of modules.

In the tip clearance measuring arrangement according to Fig. 2 a measurement tool 28 can be screwed into a threaded bore 27 within the (outer/inner) housing 12. The bore 27 comprises an internal stop 26 in form of a diameter step, which is effective in radial direction and has an accurately machined annular contact surface.

The measurement tool 28 has a measuring head 21 in the form of a lens headed rivet arranged with its shaft within a body 30 to be moveable in radial direction. The body 30 abuts with a respective outer diameter step against the contact surface of the stop 26. In an end position (referenced in Fig. 2 with reference number 21) the measuring head needs to be coincidence with the outer flow channel contour or inner wall 13.

A spring 22 pushes the measuring head 21 into the flow channel towards the slowly rotating blades (dashed lines; referenced in Fig. 2 with reference number 21'). The contact between the blade tip 19 and the measuring head 21, 21' defines than the existing tip clearance c. The maximum movement (in axial direction with respect to the measuring tool 28, in radial direction with respect to the machine axis 11) of the measuring head 21, 21' is limited by an inset 23 on the shaft.

The shaft of the measuring head 21 is connected through a bush 24 with a gauge/transmitter 25. The measurement value thus can be visualized via dial gauge or via transmitter (gauge/transmitter 25). In case a transmitter is used, the value can be directly stored in a connected computer equipment 29. When all necessary cold build blade tip clearances have been measured, the measurement tool 28 can be unscrewed and removed from the bore 27, and the bore 27 can be closed by means of a suitable plug.

The embodiment of Fig. 2 shows a true mechanical system. However, the mechanical system could also be replaced by an optical measurement head.

The invention is not limited to the described embodiments, for example the invention is also applicable for other turbomachines, such as axial turbines.

In summary, the present invention enables the measurement of cold build blade tip clearances c without lifting outer and/or inner housings. Within the idea a complete row of compressor or turbine blades can be measured by turning the rotor. The measurement can be mechanical or optical, respectively. It may also be used as reference for rotor alignment by using (e.g. 4) such measurement locations at the circumference.

Additionally, performing the cold build blade tip clearance measurement in a closed engine condition is much more accurate and effects as deformation of modules do not influence the measurement. Moreover, the coverage of all the blades is given and so an improvement in quality for the clearance information and with this a risk reduction is achievable.

### LIST OF REFERENCE NUMERALS

- 10: turbomachine (axial), for example compressor
- 11: machine axis
- 12: housing
- 13: inner wall
- 14: rotor
- 15: inlet
- 16: outlet
- 17: (guiding) vane
- 18: (running) blade
- 19: blade tip
- 20: tip clearance measuring arrangement
- 21, 21': measuring head
- 22: spring
- 23: inset
- 24: bush
- 25: gauge / transmitter
- 26: stop (accurately machined surface)
- 27: bore (radial)
- 28: measurement tool
- 29: computer equipment
- 30: body
- c: cold build tip clearance

## Claims

1. Method for measuring the cold build blade tip clearance (c) between the tip (19) of a blade (18), which is mounted on a rotor (14) of an axial turbomachine (10), whereby said rotor (14) rotates about a machine axis (11), and the inner wall (13) of a stationary housing (12), which coaxially surrounds said rotor (14) and its blading, said method comprising the steps of
a) providing a radial bore (27), which extends through said housing (12) to give access from outside said housing (12) to the interior of said housing (12), at a location, where said blade (18) passes with its tip (19), when said rotor (14) rotates around said machine axis (11);
b) providing a mechanical stop (26) for precisely limiting a radial movement through said bore (27) towards the interior of said housing (12);
c) inserting a measurement tool (28) into said bore (27) until it abuts against said mechanical stop (26);
d) moving said blade (18) with its tip (19) along said bore (27); and
e) measuring by means of said measuring tool (28) the distance between the passing tip (19) and the inner wall (13).

2. Method according to claim 1, **characterized in that** said measuring tool (28) comprises a measuring head (21, 21'), which is moveable in radial direction, projects from said bore (27) into the interior of said housing (12) and can be pushed back into said bore (27) against the action of a spring (22), and that the tip (19) of said passing blade (18) is gauged by said measuring head (21, 21').

3. Method according to claim 2, **characterized in that** said measuring head (21, 21') can be pushed back into said bore (27) in an end position, where the measuring head (21) is in coincidence with the contour of the inner wall (13), and that the distance between said end position (21) and an actual position (21') of the measuring head (21) is measured and visualized by means of a dial gauge (25).

4. Method according to claim 2, **characterized in that** said measuring head (21, 21') can be pushed back into said bore (27) in an end position, where the measuring head (21) is in coincidence with the contour of the inner wall (13), and that the distance between said end position (21) and an actual position (21') of the measuring head (21) is measured and transmitted to a computer equipment (29).

5. Method according to one of the claims 1 to 4, **characterized in that** in step (c) the measurement tool (28) is screwed into said bore (27).

6. A tip clearance measuring arrangement (20) for conducting the method according to one of the claims 1 to 5, comprising: a rotor (14) with at least one blade (18), which rotor (14) rotates around a machine axis (11); a stationary housing (12), which coaxially surrounds said rotor (14) and its blading; a radial bore (27), which extends through said housing (12) to give access from outside said housing (12) to the interior of said housing (12), at a location, where said blade (18) passes with its tip (19), when said rotor (14) rotates around said machine axis (11); a mechanical stop (26) for precisely limiting a radial movement through said bore (27) towards the interior of said housing (12); and a measurement tool (28) being removably inserted into said bore (27) to abut against said mechanical stop (26).

7. Tip clearance measuring arrangement according to claim 6, **characterized in that** said measurement tool (28) is screwed into said bore (27).

8. Tip clearance measuring arrangement according to claim 6 or 7, **characterized in that** said measuring tool (28) comprises a measuring head (21, 21'), which is moveable in radial direction, projects from said bore (27) into the interior of said housing (12) and can be pushed back into said bore (27) against the action of a spring (22).

9. Tip clearance measuring arrangement according to claim 8, **characterized in that** said measuring head (21, 21') is moveable between an end position, where the measuring head (21) is in coincidence with the contour of the inner wall (13), and a measuring position (21'), where it projects from said bore (27) into the interior of said housing (12), and that means (25) are provided for measuring the distance between said end position and a measuring position.

10. Tip clearance measuring arrangement according to claim 9, **characterized in that** said measuring means comprises a dial gauge (25).

11. Tip clearance measuring arrangement according to claim 9, **characterized in that** said measuring means comprises a transmitter (25) being in wireless connection with a computer equipment (29).
